# EUROPEAN PATENT SPECIFICATION

(11) **EP 1 344 669 B1**
(45) Date of publication and mention of the grant of the patent: **17.08.2005**
(21) Application number: 00970354.7
(22) Date of filing: 04.10.2000
(51) Int. Cl.: B60H 3/06

(54) **METHOD FOR REMOVING HARMFUL IMPURITIES FROM THE AIR AND DEVICE FOR CARRYING OUT SAID METHOD**
VERFAHREN ZUR ENTFERNUNG SCHÄDLICHER VERUNREINIGUNGEN AUS DER LUFT UND DAFÜR GEEIGNETE VORRICHTUNG
PROCEDE D'EPURATION DE L'AIR DES IMPURETES NOCIVES ET DISPOSITIF CORRESPONDANT

(30) Priority: 07.06.2000 RU 2000114229
(43) Date of publication of application: 17.09.2003
(73) Proprietor: Kutyev, Anatoly Anatolyevich, Moscow, 117133 (RU)
(72) Inventor: KUTYEV, Anatoly Anatolyevich, Moscow, 117133 (RU); ZLOTOPOLSKY, Vladimir Matveevich, Moscow, 123459 (RU); GUZENBERG, Arkady Samuilovich, Korolev, 141070 (RU); KRYCHENKOV, Dmitry Anatolyevich, Moscow, 117465 (RU); EREMEEV, Sergei Ivanovich, Moscow, 117419 (RU); MARKIN, Sergei Vladimirovich, Moscow, 105264 (RU); GAVRILOV, Lev Ivanovich, Moscow, 117465 (RU); ZHINZHIKOV, Leonid Aleksandrovich, Moscow, 125254 (RU)
(74) Representative: Kador, Ulrich, Dr.
(86) International application number: PCT/RU2000/000396
(87) International publication number: WO 2001/094137

(56) References cited:
- EP-A- 0 736 403
- EP-A1- 0 635 685
- EP-A2- 0 722 072
- WO-A1-86/04553
- WO-A1-95/13506
- DE-A- 19 806 880
- DE-A1- 4 228 586
- SU-A1- 1 233 915
- US-A- 4 530 817
- US-A- 4 733 605
- US-A- 5 938 523

## Description

### Field of art

This invention relates to methods and devices for removing harmful impurities from the air and its conditioning in relatively hermetic areas, mainly in passenger compartments of means of transport. However they can be also used in other relatively hermetic areas.

There are known a device and a method for removing harmful impurities from the air fed to the passenger compartment of a vehicle. The device represents a special filter which retains allergens and carcinogen particles ("Za rulyom", No. 11, 1999, page 52.).

This device has a drawback in that it removes from the air only large particles, whereas a number of harmful impurities, in particular carbon oxide, nitric oxides and hydrocarbons are not removed.

The most similar to this invention are the device and the method for removing harmful impurities from the air in relatively hermetic areas, mainly in passenger compartments of means of transports, which consist in removing from the air supplied by a fan from a relatively hermetic area (the passenger compartment of a means of transport) humidity and organic harmful impurities with the aid of adsorption filters, carbon oxide with the aid of a low-temperature catalytic filter, depending on a content of the harmful impurities. The device comprises a gas duct, a fan, two adsorption filters operating in series, a low-temperature catalytic filter and a valve box. In the device there operate in series two adsorption filters, which remove organic harmful impurities, whereas a low-temperature catalytic filter is made for removal of carbon oxide (L.S. Bobe, Yu. E. Sinyak, A.A. Berlin, V.A. Soloukhin. Ecological and technical systems. M.: MAI publication. 1992, page 38).

A drawback of this device consists in its inability to remove nitric oxides, sulphur oxides, ammonia and a number of other compounds poorly sorbed on activated carbon. In this case there is a high probability of the ingress of harmful impurities having the properties of a catalytic poison into the low-temperature catalytic filter. These are for example sulphur oxides, hydrogen sulphide. In addition, switching on and off of the device is manual as there are no operative data on the extent of atmosphere pollution with harmful impurities. Another drawback of these method and device is replenishment of the air discharged during regeneration by using gas cylinders.

US 5 938 523 shows a regenerative adsorption filter system without a catalyst filter.

### Disclosure of the invention

The technical result of the invention is maintaining the equilibrium between the gas streams of a plenum ventilation and the stream of the air discharged during regeneration making it possible to cool the regenerated adsorption filter in a quick manner and to quickly switch the device on and off in relation to the quantity and quality of the harmful impurities inside the relatively hermetic area.

The technical result is attained owing to the fact that in the method of removing harmful impurities from the air in relatively hermetic areas, mainly in the passenger compartment of a means of transport, which consists in alternately in two streams removing from the air fed by the fans from a relatively hermetic compartment (from the passenger compartment of a means of transport) humidity and organic harmful impurities using adsorption filters, chemisorbed compounds using chemisorbent, carbon oxide using a low-temperature catalytic filter and catalytic gases with the aid of adsorption filters and chemisorbent, depending on a quantity and quality of harmful impurities, there is carried out an alternate regeneration of the activated carbon of an adsorption filter inoperative at the moment in one of the streams with the aid of humidity adsorbed on silica gel, by heating this adsorption filter to 160° C and cooling it by the fan, maintaining an equilibrium between a volume of the air fed into a relatively hermetic compartment from the atmosphere and a volume of the air discharged into the atmosphere in the process of regeneration. Each adsorption filter com-prises a double layer of silica gel - activated carbon sorbent. For regeneration, the silion gel is upstream the activated carbon.

The device for carrying out this method in relatively hermetic areas having air intake and exhaust holes comprises two fans, each being connected via the adsorption filter and a valve box to an inlet of low-temperature catalytic filter, a heater, a regulated air flap at the inlet of the intake hole to provide air intake from the atmosphere to the compartment in accordance with air discharge during regeneration, a unit for analysing the quality of the atmospheric air, which provides shutoff of the air flap in case of drastic rise in harmful impurities concentration of the intake air, and a unit-for analysing quality of the air in the area, which provides alternate switching on and off of the valves in the valve box and sequential switching on and off of the heater for heating the adsorption filter to be regenerated and the fan connected to the said filter, the valve box is made so that each of the adsorption filters can be connected alternately to the low-temperature catalytic filter during air cleaning or to the hole for air discharging into the atmosphere during regeneration, with two layers of sorbent being placed in the adsorption filters and low-temperature catalytic filter in the following sequence for regeneration: silica gel upstream of activated carbon in the adsorption filters and chemisorbent upstream of catalyst in low-temperature catalytic filter.

Furthermore, the valve box is made in form of two "or" valves, with their inlets being connected to outlets of the adsorption filters, respectively, the first outlets being connected to low-temperature catalytic filter, and the second outlets being connected to the holes for discharging the air into the atmosphere. Furthermore, the unit for analysing quality of the air in the compartment comprises gas sensors of harmful impurities.

Furthermore the heater is made so that the adsorption filters can be heated alternately up to 160°C.

Furthermore one of the fans has an air flow equal to plenum ventilation air volume depending on a position of the air flap.

Using two fans makes it possible to perform the cooling of a regenerated adsorption filter with simultaneous operation of the other adsorption filter on air cleaning. In this case a cooling time is considerably reduced due to forced heat removal resulting in reduced filter dimensions and sorbent volume.

Using double layer of sorbent, that is silica gel-activated carbon, makes it possible to carry out the activated carbon regeneration process with the aid of humidity adsorbed on silica gel resulting in considerable reduction of regeneration temperature (from 220-250 to 160°C). The chemisorbent located upstream of the catalyst provides removal of chemisorbed compounds as well as catalytic poisons from the air, for example sulphur compounds. Thus, sequential passage of the air through several layers of sorbents makes it possible to achieve a high extent of air cleaning and to avoid poisoning of the low-temperature catalyst.

In order to maintain the equilibrium between the gas streams the device is equipped with the regulated air flap, which is program-connected with an air flow through the adsorption cartridge being regenerated. Therewith a balance between the streams of plenum ventilation determined by a position of the air flap and an air flow through the filter being regenerated is achieved. In this case a replenishment of the air discharged during regeneration is effected at the expense of natural external air intake, which does not require additional gas cylinders like in the prototype.

An essential advantage of the device is the use of gas sensors, which allows quick automatic switching on and off of the device, depending on quantity and quality of harmful impurities in the atmosphere. This, in its turn, reduces power consumption of the device and extends a service life of its separate components.

The said features are essential and interconnected by cause-and-effect relation with formation of a combination of essential features sufficient for achieving the technical result.

The method of removing harmful impurities from the air in relatively hermetic areas, mainly in the compartment of a means of transport, consists in that the air fed by the fans from a relatively hermetic area is cleaned alternately in two streams to remove humidity and organic harmful impurities with the aid of adsorption filters, chemisorbed compounds with the aid of chemisorbent, carbon oxide with the aid of low-temperature catalytic filter and catalytic gases with the aid of the adsorption filters and chemisorbent,depending on a quantity and quality of harmful impurities. Thereafter alternate regeneration of an adsorption filter inoperative at the moment is carried out in one of air streams with the aid of humidity adsorbed on silica gel of the said filter, by heating it to 160° C and cooling it by the fan. Therewith the equilibrium between the air volume coming to a relatively hermetic area from the atmosphere and the air volume discharged into the atmosphere in the process of regeneration is maintained. Each adsorption filter comprises a double layer of sorbent: silica gel - activated carbon.

### Brief description of drawings

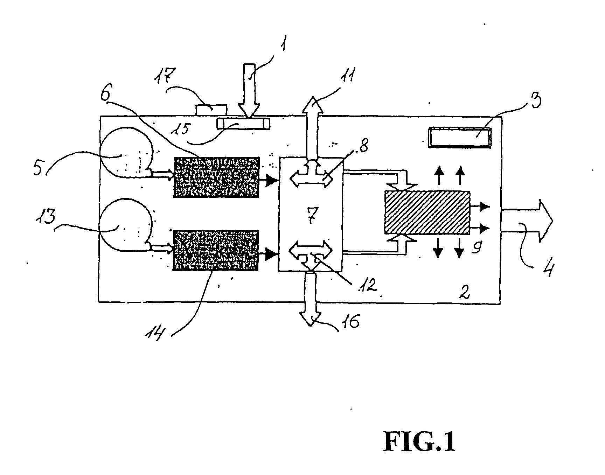

The drawing shows the device for air cleaning according to the invention.

### The best embodiment of the invention

This invention is exemplified by the particular embodiment, which however is not the only possible one but explicitly shows the possibility of achieving the specified technical result using the combination of the essential features.

The device operates as follows. The air from the external atmosphere 1 comes into relatively hermetic area 2, for example, to the passenger compartment of a means of transport, with air flow Q. Air quality control unit 3 carries out continuous control of air quality in the area. In case of clean atmosphere the cleaning device is not switched on, and the air is discharged through leaking spaces of area 4, with air intake 1 being naturally equal to its discharge 4.

If the air in the area 2 is polluted, air quality control unit 3 switches on fan 5. The air passes successively through filter 6 with double layer of silica gel-activated carbon where humidity (on silica gel) and organic harmful impurities (on activated carbon) are removed whereof the air passes through valve box 7 with "or" valve 10 to the filter with a layer of chemisorbent-catalyst 9 where nitric oxides, sulphur oxides, ammonia and other chemisorbed compounds and carbon oxide are removed. The cleaned air is discharged into area 2.

After filter 6 has operated for a few hours fan 5 is switched off, and "or" valves in valve box 7 are switched. "Or" valve 10 is closed and connected to atmosphere hole 11, and "or" valve 12 is opened and connected to the compartment space. Now second fan 13 is switched on, and the air passes through second filter 14 with silica gel and activated carbon and further via valve box 7 and "or" valve 12 to filter 9, whereof it is fed to the area. At the same time filter 6 is heated to 160° C, thereafter the heater is switched off and fan 5 is switched on with airflow equal to the airflow of plenum ventilation 1, which is program-dependent on a position of flap 15. Water vapour desorbed from silica gel forces out of activated carbon the adsorbed harmful impurities, and vapour-gas mixture with heat is discharged through hole 11 into the external atmosphere. On completion of regeneration process and depletion of filter 14 re-switching of valves "or" takes place, and regeneration of filter 14 is performed, with regeneration products and heat being discharged through hole 16 into the atmosphere. In this case filter 6 cleans the air in the area. The device also has unit 17 for analysis of air quality in the atmosphere, which provides switching of air flap 15 in case of sharp rise in harmful impurities concentration of intake air 1.

The applied inventions are proved by the way of the particular embodiment.

The external air containing harmful impurities is fed through the flap with an air flow of 6 m³/h to the passenger compartment occupied by three passengers. The device is equipped with metal-oxide solid state sensors for CO, nitric oxides and hydrocarbons. When the concentration of any compound reaches MAC level, one of the fans of the cleaning device with an air flow of 15 m³/h is switched on by a command of gas sensing sensors. The air passes successively through the cartridge with KCM-grade silica gel - FAS-grade activated carbon double layer sorbent, and further through the cartridge with a double layer of HPSB-grade chemisorbent-AK-62 catalyst. An efficiency of removing harmful impurities is 98% for NO₂, 96% for CO and 95% for CnHm.

When the concentration of harmful impurities in the intake air is equal to 15 mg/m³ of CO with a metabolic rate of CO emission being equal to 4.7 mg/hour, 7 mg/m³ of nitric oxides and 8 mg/m³ of hydrocarbons, as a result of the cleaning the concentration of the said compounds in the passenger compartment of a means of transport will be reduced to 5.1 mg/m³ for CO, to 2.0 mg/m³ for nitric oxides and to 2.4 mg/m³ for hydrocarbons.

After four hours of filter operation switching of the valves takes place, resulting in switching on of the second sorption filter with the second fan, which, from this point onwards cleans the air in the passenger compartment. In this period the first sorption filter is heated to 160°C. When this temperature is attained, the heater is switched off, and the first fan is switched on with an airflow of 6 m³/hour, being equal to plenum ventilation airflow program-governed by a flap position. Water vapour forces out the adsorbed hexane molecules from the activated carbon, and vapour-gas mixture is discharged into the atmosphere. The forced heat removal cools down the sorption filter to a normal temperature, after which it is ready for reuse.

### Industrial applicability

This invention meets the "industrial applicability" condition of patentability since its implementation is possible with the existing means of production using the known process operations.

## Claims

1. A method for removing harmful impurities from the air in relatively hermetic areas, mainly in the compartment of a means of transport, which consists in that cleaning of the air fed by the fans from a relatively hermetic area is performed alternately in two streams to remove humidity and organic harmful impurities with the aid of adsorption filters, wherein each adsorption filter comprises a double layer of silica gel-activated carbon sorbent, chemisorbed compounds with the aid of chemisorbent, carbon oxide with the aid of low-temperature catalytic filter and catalytic gases with the aid of the adsorption filters and chemisorbent, depending on a quantity and quality of harmful impurities, alternate regeneration of the activated carbon of an adsorption filter inoperative at the moment is carried out in one of the air streams with the aid of humidity adsorbed on silica gel, by heating this adsorption filter to 160°C and cooling it by the fan, therewith an equilibrium between the air volumes coming into a relatively hermetic area from the atmosphere and the air volume discharged into the atmosphere in the process of regeneration is maintained, wherein for regeneration the silica gel is upstream the activated carbon.

2. A device for carrying out the method in a relatively hermetic area (2), which has an intake hole and a discharge hole comprises two fans (5,13), each being connected via an adsorption filter (6,14) and a valve box (7) to an inlet of low-temperature catalytic filter (9), a heater, a regulated air flap (15) installed at the inlet of the intake hole to provide air intake from the atmosphere into the area in accordance with the air discharge during regeneration, a unit (17) for analysing air quality in the atmosphere, which provides shutoff of the air flap in case of a drastic rise in harmful impurities concentration of the intake air, and a unit (3) for analysing quality of the air in the area, which provides alternate switching on and off of the valves in the valve box and sequential switching on and off of the heater for heating the adsorption filter being regenerated, and the fan connected to the said filter, the valve box (7) is made so that each of the adsorption filters can be connected alternately to the low-temperature catalytic filter during air cleaning or to the hole for air discharge into the atmosphere during regeneration, with two layers of sorbent being placed in the adsorption filters (6,14) and low-temperature catalytic filter (9) in the following sequence for regeneration: silica gel upstream of activated carbon in the adsorption filters (6,14) and chemisorbent upstream of a catalyst in low-temperature catalytic filter (9).

3. The device according to claim 2 wherein the valve box is made in form of two "or" valves, (8,12) with their inlets being connected to outlets of adsorption filters, respectively, the first outlets being connected to low-temperature catalytic filter, and the second outlets being connected to the holes for air discharge into the atmosphere.

4. The device according to claim 2 wherein the unit for analysing quality of the air in the area comprises gas sensors for harmful impurities.

5. The device according to claim 2 wherein the heater is made so that adsorption filters can be alternately heated to 160°C.

6. The device according to claim 2 wherein one of the fans is made so that its airflow is equal to the air volume of plenum ventilation governed by a position of the air flap.

## Patentansprüche

1. Verfahren zum Entfernen von schädlichen Verunreinigungen aus der Luft in relativ hermetischen Bereichen, hauptsächlich in Abteilen eines Transportmittels, das darin besteht, daß das Reinigen der Luft, die von Ventilatoren aus einem relativ hermetischen Bereich zugeführt wird, im Wechsel in zwei Strömen durchgeführt wird, um Feuchtigkeit und schädliche organische Verunreinigungen mit Hilfe von Adsorptionsfiltern, wobei jeder Adsorptionsfilter eine Doppelschicht aus einem Kieselgel-Aktivkohle-Sorptionsmittel umfaßt, chemisch adorbierte Verbindungen mit Hilfe eines chemischen Adsorptionsmittels, Kohlenoxid mit Hilfe eines katalytischen Tieftemperaturfilters und katalytische Gase mit Hilfe der Adsorptionsfilter und des chemischen Adsorptionsmittels zu entfernen, wobei dies von der Menge und der Natur der schädlichen Verunreinigungen abhängt; eine abwechselnde Regenerierung der Aktivkohle eines sich im Moment nicht in Betrieb befindlichen Adsorptionsfilters in einem der Luftströme mit Hilfe der auf dem Kieselgel adsorbierten Feuchtigkeit durchgeführt wird, indem dieser Adsorptionsfilter auf 160°C erwärmt und mit dem Ventilator gekühlt wird, womit ein Gleichgewicht zwischen den Luftvolumina, die aus der Atmosphäre in den relativ hermetischen Bereich gelangen, und dem Luftvolumen aufrechterhalten wird, das beim Regenerierungsverfahren in die Atmosphäre abgegeben wird, wobei sich das Kieselgel für die Regenerierung stromaufwärts der Aktivkohle befindet.

2. Vorrichtung zur Durchführung des Verfahrens in einem relativ hermetischen Bereich (2), die aufweist: eine Ansaugöffnung und eine Auslaßöffnung, die zwei Ventilatoren (5,13) umfaßt, die jeweils über einen Adsorptionsfilter (6,14) und eine Ventilkammer (7) mit einem Einlaß des katalytischen Tieftemperaturfilters (9) verbunden sind, eine Heizeinrichtung, eine gesteuerte Luftklappe (15), die am Einlaß der Ansaugöffnung installiert ist, um entsprechend der während der Regenerierung abgegebenen Luft für in diesen Bereich aus der Atmosphäre angesaugte Luft zu sorgen, eine Einheit (17) zum Analysieren der Luftqualität in der Atmosphäre, die im Falle einer deutlichen Zunahme der Konzentration der schädlichen Verunreinigungen in der angesaugten Luft für das Schließen der Luftklappe sorgt, und eine Einheit (3) zum Analysieren der Luftqualität in dem Bereich, die für das abwechselnde An- und Abschalten der Ventile in der Ventilkammer und das anschließende An- und Abschalten der Heizeinrichtung zum Erwärmen des Adsorptionsfilters, der regeneriert wird, und des mit diesem Filter verbundenen Ventilators sorgt, wobei die Ventilkammer (7), so ausgeführt ist, daß jeder der Adsorptionsfilter im Wechsel während der Luftreinigung mit dem katalytischen Tieftemperaturfilter oder während der Regenerierung mit der Öffnung für die Abgabe der Luft in die Atmosphäre verbunden werden kann, wobei sich für die Regenerierung zwei Schichten des Sorptionsmittels in der folgenden Reihenfolge in den Adsorptionsfiltern (6,14) und dem katalytischen Tieftemperaturfilter (9) befinden: Kieselgel stromaufwärts der Aktivkohle in den Adsorptionsfiltern (6,14) und chemisches Adsorptionsmittel stromaufwärts eines Katalysators im katalytischen Tieftemperaturfilter (9).

3. Vorrichtung nach Anspruch 2, wobei die Ventilkammer in Form von zwei "Zweiwege"-Ventilen (8,12) ausgebildet ist, wobei deren Einlässe entsprechend mit den Auslässen der Adsorptionsfilter verbunden sind, wobei die ersten Auslässe mit dem katalytischen Tieftemperaturfilter und die zweiten Auslässe mit den Öffnungen für die Abgabe der Luft in die Atmosphäre verbunden sind.

4. Vorrichtung nach Anspruch 2, wobei die Einheit zum Analysieren der Luftqualität in dem Bereich Gassensoren für schädliche Verunreinigungen umfaßt.

5. Vorrichtung nach Anspruch 2, wobei die Heizeinrichtung so ausgebildet ist, daß die Adsorptionsfilter im Wechsel auf 160°C erwärmt werden können.

6. Vorrichtung nach Anspruch 2, wobei einer der Ventilatoren so ausgebildet ist, daß sein Luftstrom gleich dem Luftvolumen der Plenumventilation ist, die von der Position der Luftklappe reguliert wird.

## Revendications

1. Procédé pour éliminer les impuretés nocives de l'air dans des zones relativement hermétiques, principalement dans le compartiment d'un moyen de transport, procédé consistant en ce que l'épuration de l'air aspiré par les ventilateurs d'une zone relativement hermétique est effectuée en alternance dans deux courants pour éliminer l'humidité et les impuretés organiques nocives à l'aide de filtres d'adsorption chaque filtre d'adsorption comprenant une double couche de sorbant gel de silice-charbon activé, les composés chimiosorbés à l'aide d'un chimiosorbant, l'oxyde de carbone à l'aide d'un filtre catalytique à basse température et les gaz catalytiques à l'aide de filtres d'adsorption et d'un chimiosorbant, en fonction de la quantité et de la qualité des impuretés nocives, une régénération alternée du charbon activé d'un filtre d'adsorption inopérant étant en l'occurrence effectuée dans un des courants d'air à l'aide de l'humidité adsorbée sur le gel de silice, en chauffant ce filtre d'adsorption à 160°C et en le refroidissant par le ventilateur, et, conjointement, on maintient un équilibre entre les volumes d'air entrant dans une zone relativement hermétique depuis l'atmosphère et le volume d'air déchargé dans l'atmosphère en cours de régénération, dans lequel, pour la régénération, le gel de silice est situé en amont du charbon activé.

2. Dispositif pour effectuer le procédé dans une zone relativement hermétique (2), qui a un trou d'admission et un trou de décharge, comprenant deux ventilateurs (5, 13), chacun étant relié, par un filtre d'adsorption (6, 14) et une boîte à soupapes (7), à une entrée d'un filtre catalytique à basse température (9), un dispositif de chauffage, un clapet d'air régulé (15) installé à l'entrée du trou d'admission pour ménager une admission d'air de l'atmosphère dans la zone en fonction de la décharge d'air au cours de la régénération, une unité (17) pour analyser la qualité de l'air dans l'atmosphère, qui assure la fermeture du clapet d'air en cas d'augmentation drastique de la concentration en impuretés nocives de l'air d'admission, et une unité (3) pour analyser la qualité de l'air dans la zone, qui assure la mise en circuit et hors circuit en alternance des soupapes de la boîte à soupapes et la mise en circuit et hors circuit en séquence du dispositif de chauffage pour chauffer le filtre d'adsorption régénéré, et le ventilateur relié audit filtre, la boîte à soupapes (7) est réalisée de sorte que chacun des filtres d'adsorption puisse être raccordés en alternance au filtre catalytique à basse température au cours de l'épuration de l'air ou au trou pour décharger l'air dans l'atmosphère au cours de la régénération, deux couches de sorbant étant placées dans les filtres d'adsorption (6, 14) et le filtre catalytique à basse température (9) de la séquence suivante pour régénération : du gel de silice en amont de charbon activé dans les filtres d'adsorption (6, 14) et un chimiosorbant en amont d'un catalyseur dans le filtre catalytique à basse température (9).

3. Dispositif selon la revendication 2, dans lequel la boîte à soupapes est formée de deux soupapes "OU" (8, 12) dont les entrées sont reliées à des sorties de filtres d'adsorption, respectivement, les premières sorties étant reliées au filtre catalytique à basse température et les secondes sorties étant reliées aux trous pour la décharge d'air dans l'atmosphère.

4. Dispositif selon la revendication 2, dans lequel l'unité permettant d'analyser la qualité de l'air dans la zone comprend des capteurs de gaz pour les impuretés nocives.

5. Dispositif selon la revendication 2, dans lequel le dispositif de chauffage est conçu de sorte que les filtres d'adsorption puissent être chauffés en alternance à 160°C.

6. Dispositif selon la revendication 2, dans lequel un des ventilateurs est conçu de sorte que son écoulement d'air soit égal au volume d'air de ventilation du plénum régi par une position du clapet d'air.
